# FASCICULE DE BREVET EUROPEEN

(11) **EP 2 877 896 B1**
(45) Date de publication et mention de la délivrance du brevet: **05.07.2017**
(21) Numéro de dépôt: 13759266.3
(22) Date de dépôt: 25.07.2013
(51) Int. Cl.: G03B 15/05, H04B 1/3888, H04M 1/02, H04M 1/725, H04N 5/225, G03B 15/03

(54) **SYSTÈME D'ÉCLAIRAGE PHOTOGRAPHIQUE POUR TABLETTE TACTILE**
PHOTOGRAPHISCHES BELEUCHTUNGSSYSTEM FÜR TOUCHPAD
PHOTOGRAPHIC LIGHTING SYSTEM FOR TOUCH PAD

(30) Priorité: 26.07.2012 FR 1257243
(43) Date de publication de la demande: 03.06.2015
(73) Titulaire: ACEP France, 75017 Paris (FR)
(72) Inventeur: SAYAG, Jean-Philippe, F-75008 Paris (FR)
(74) Mandataire: Oudin, Stéphane
(86) Numéro de dépôt international: PCT/FR2013/051794
(87) Numéro de publication internationale: WO 2014/016522

(56) Documents cités:
- EP-A1- 2 320 626
- WO-A2-2012/024578
- US-A1- 2009 298 537
- US-A1- 2011 255 218

## Description

### Domaine technique

La présente invention a pour objet un système d'éclairage photographique pour tablette tactile.

### Technique antérieure

Par tablette tactile, on désigne dans le présent texte un ordinateur portable et ultraplat, qui se présente comme un écran tactile et qui permet notamment d'accéder à des contenus multimédias.

Dans le domaine de la confection de lunettes de correction visuelle, on réalise des mesures sur le porteur équipé des montures de lunette qu'il a choisies pour déterminer des données relatives à la configuration d'implantation des verres correcteurs, notamment leur centrage optique, en regard des yeux du porteur. Ces données sont principalement l'écart pupillaire, la hauteur pupillaire, l'inclinaison et le galbe de la monture, l'angle pantoscopique, la distance verre-oeil.

Pour réaliser ces mesures, il existe une série d'instruments mécaniques qu'un opticien formé à cette fin manipule successivement afin d'obtenir les données nécessaires. Cette technique nécessite toutefois une certaine durée et exige du praticien un savoir-faire certain pour que les mesures soient correctement effectuées.

On a ainsi développé des systèmes de centrage basés sur une capture d'images photographiques avec traitement informatisé, qui font appel à un outil de mesure doté de points de référence et fixé sur la monture équipant le porteur. De tels systèmes et outils de mesures sont décrits par exemple dans les brevets FR2896682, FR2903504 ou FR2931258 au nom du demandeur. A partir généralement de deux clichés, un en vue frontale et l'autre en vue de coté, on détermine l'ensemble des paramètres à mesurer.

Ces systèmes de centrage par photographie exploitent le reflet cornéen pour déterminer le centre des pupilles du porteur.

Ces systèmes de centrage se présentent sous la forme de colonne avec un écran dotés d'une caméra photographique, d'une source d'éclairage ou d'un flash intégré et d'une unité de traitement informatique.

Or l'évolution de la technique permet aujourd'hui d'envisager d'utiliser une tablette tactile munie d'une caméra photographique comme unité de prise de vue et de traitement informatique pour réaliser ces mesures permettant l'implantation correcte des verres correcteurs dans un monture de lunettes choisies par un porteur.

Si quelques rares modèles antérieurs en étaient équipés, aucune des tablettes tactiles commercialisées à la date de dépôt de la présente demande n'est équipée d'un flash photographique, comme peuvent l'être la plupart des téléphones mobiles munis d'une caméra photographique. Et il n'existe pas non plus de flash photographique que l'on peut adjoindre en accessoire à une tablette tactile permettant de suppléer à son absence comme équipement d'origine.

La personne réalisant les prises de vue avec une tablette tactile est donc dépendante de l'éclairage environnant et d'une source de lumière dont l'orientation du faisceau n'est pas précise par rapport à l'axe de visée des caméras de la tablette : la qualité et la fiabilité des mesures réalisées sont affectées. Exemples de tablettes conventionnelles sont divulgues par US 2011/0188179 A1 et WO 2012/024578 A2. La présente invention vise donc à pallier l'absence de solution existante et à fournir ainsi un système d'éclairage pour tablette tactile facile à mettre en oeuvre, qui permet notamment de réaliser des prises de mesures de centrage pupillaire plus précises et fiables qu'en l'absence d'un tel système d'éclairage.

### Résumé de l'invention

La présente invention concerne un système d'éclairage photographique selon la rev. indépendante 1, pour tablette tactile comportant une première caméra dorsale remarquable en ce que ledit système est constitué d'une coque de protection dorsale amovible munie d'une source lumineuse.

Selon une variante, la coque et la source lumineuse sont munies de moyens de liaison permettant une fixation amovible de la source lumineuse sur ladite coque.

On comprend bien que le système ainsi constitué en deux éléments permet de laisser la coque à demeure sur une tablette tactile et d'y adjoindre dès que de besoin et à volonté la source lumineuse, facilitant la manipulation, le transport et le rangement de la tablette équipée du système d'éclairage selon l'invention.

### Brève description des figures

D'autres avantages et caractéristiques ressortiront mieux de la description qui va suivre, donnée à titre d'exemple non limitatif, d'une variante d'exécution particulièrement préférée de la présente invention, en référence aux dessins annexés sur lesquels :
- les figure 1 et 2 sont respectivement une vue de face et de dos d'une tablette tactile équipée du système d'éclairage selon l'invention de l'appareil ;
- la figure 3 est similaire à la figure 2, mais sans la source lumineuse ;
- la figure 4 est une vue en perspective et en éclaté du système selon l'invention équipant une tablette tactile ;
- les figures 5 et 6 sont respectivement une vue de profil et de face de la source lumineuse mise en oeuvre sur les figures 1,2 et 4.

### Description détaillée de l'invention

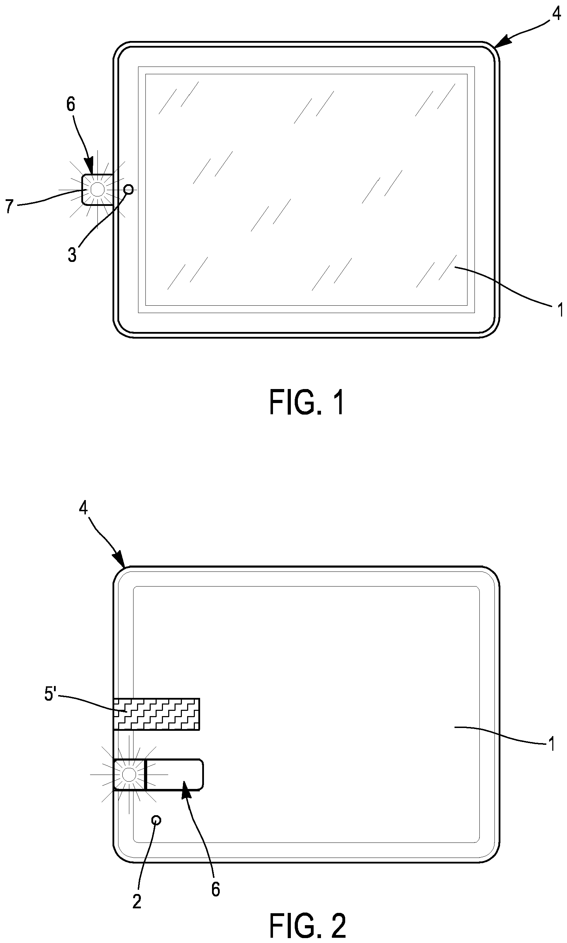

En référence aux figures 1 et 2, on a représenté une tablette tactile 1 comportant une première caméra 2 dorsale et une seconde caméra 3 frontale. Un écran tactile occupe la quasi-totalité de sa face avant. Cette tablette est équipée d'un système d'éclairage photographique conforme à la présente invention.

Selon une caractéristique essentielle, ledit système est constitué d'une coque 4 de protection dorsale amovible et d'une source lumineuse 6.

Selon la variante représentée, la coque 4 et la source lumineuse 6 sont munies de moyens de liaison permettant une fixation amovible de la source lumineuse 6 sur ladite coque 4.

Selon une autre variante, non représentée sur les figures, la source lumineuse 6 est directement fixée sur la coque 4, de manière permanente. Dans cette configuration, la source lumineuse 6 est avantageusement une diode électroluminescente, dotée d'un câble d'alimentation. De préférence, la diode est du type CMS (pour Composant Monté en Surface). En effet, étant ainsi de très faibles dimensions, notamment en hauteur, elle peut être aisément intégrée dans l'épaisseur de la coque avec son câble d'alimentation, de sorte à affleurer en surface ou être juste en proéminence de son épaisseur. Son alimentation énergétique est assurée par un câble connecté à un port de communication de la tablette tactile, par exemple la prise jack audio.

La coque 4 peut être réalisée dans un matériau souple (silicone par exemple) ou rigide (polycarbonate par exemple). Elle comporte des évidements (non représentés sur les figures) correspondant aux orifices de la tablette tactile 1 sur le dos de laquelle elle est destinée à être placée.

En particulier, les moyens de liaison sur la coque 4 forment au moins une première zone de positionnement 5 de la source lumineuse 6 sur ladite coque 4. Cette première zone de positionnement 5, dite dorsale, permet de placer et fixer la source lumineuse 6 à proximité de la première caméra 2 dorsale.

Selon la variante d'exécution représentée, les moyens de liaison sur la coque 4 forment en outre une seconde zone de positionnement 5' de la source lumineuse 6 sur la coque 4. Cette seconde zone de positionnement 5', dite frontale, permet de placer et fixer la source lumineuse 6 de sorte que le faisceau lumineux soit le plus près possible de la seconde caméra 3 frontale.

Le positionnement parallèle et au plus près à l'axe de visée des caméras du faisceau lumineux produit par la source lumineuse, permet de réduire au maximum les problèmes de parallaxe et assure une précision maximale de la prise de mesure.

Selon une première variante de réalisation, les moyens de liaison sont du type bande adhésive. De préférence, on utilisera un adhésif du type repositionnable. Lorsque la source lumineuse 6 n'est pas fixée sur la coque 4, on masquera la bande adhésive avec une bande protectrice, afin de préserver son pouvoir adhésif et de la protéger de l'encrassement.

Selon une seconde variante de réalisation, les moyens de liaison sont du type bande auto-agrippante, par boucles et crochets. Ainsi par exemple, les zones de positionnement 5,5' pourront être constituées par une bande ou des pavés en crochet, tandis que la source lumineuse sera revêtue sur un de ses coté au moins d'une bande ou de pavés de boucles.

Selon une dernière variante préférée, les moyens de liaison sont avantageusement des aimants.

La source lumineuse 6 comportera au moins sur une face une zone magnétique (par exemple en métal) coopérant avec les aimants de la coque 4.

De manière avantageuse, la source lumineuse 6 est munie d'aimants de polarité opposée à ceux de la coque 4. Cela permet avantageusement de réduire la puissance de l'aimant sur la coque et en outre, comme cela sera expliqué plus loin, permet aussi de procéder à une discrimination de la fixation selon que l'on souhaite prendre une photographie avec la caméra frontale ou la caméra dorsale.

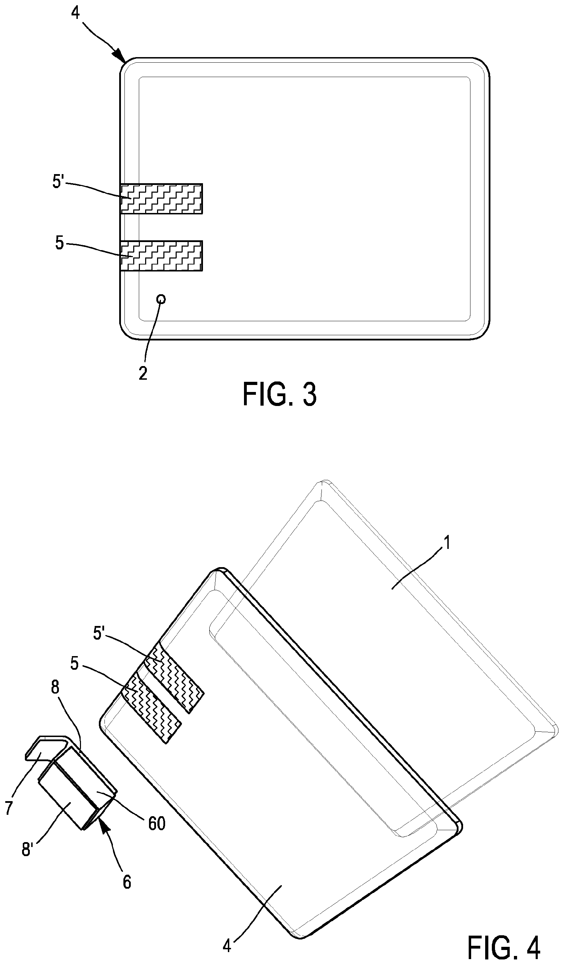

Selon la variante représentée aux figures 4, 5 et 6 notamment, la source lumineuse 6 comporte un corps principal 60 parallépipédique dont la face arrière est munie d'un aimant 8 pour le positionnement sur la première zone de positionnement 5 pour prise de vue avec la caméra dorsale 2 et la face avant est munie d'un aimant 8' pour le positionnement sur la seconde zone de positionnement 5' pour prise de vue avec la caméra frontale 3 et la face arrière d'un aimant 8 pour le positionnement dorsal. On comprend bien qu'on pourra en alternative substituer les aimants 8,8' par des plaques métalliques coopérant avec les aimants des zones de fixation 5,5' de la coque 4.

Cette variante où les moyens de liaison sont des aimants est particulièrement avantageuse sur le plan esthétique, de l'encombrement et de l'encrassement des zones de positionnement 5,5' car les aimants peuvent être intégrés dans l'épaisseur de la coque 4.

Selon une autre caractéristique de l'invention, la source lumineuse 6 comporte des moyens d'orientation du faisceau lumineux qu'elle génère de telle sorte qu'il soit perpendiculaire au plan principal de la coque 4 et ainsi parallèle à l'axe de visée de la caméra 2,3 de la tablette tactile 1 lorsque le système d'éclairage est assemblé sur ladite tablette 1. Cela assure une meilleure précision de la mesure du reflet cornéen.

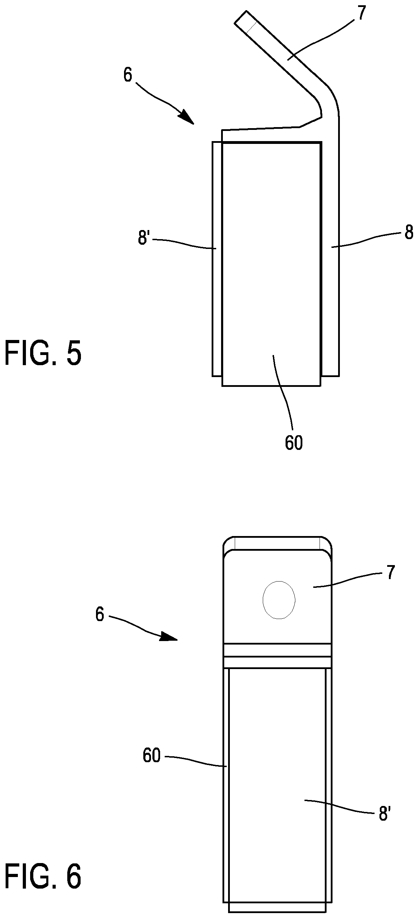

De préférence, les moyens d'orientation du faisceau lumineux comportent une surface de réflexion. En référence aux figures 5 et 6 notamment, cette surface de réflexion peut être constituée par un miroir 7 plan et fixe. Selon une autre variante, non représentée, le miroir plan est monté en rotation sur la tête de la source lumineuse 6, de sorte à renvoyer le faisceau d'un coté ou à son opposé selon son positionnement : la tête de la source lumineuse est dite orientable car elle permet d'orienter le faisceau dans deux directions opposées.

La surface de réflexion peut également être obtenue avec un prisme, monté ou non en rotation.

Selon une autre variante, non représentée, la surface de réflexion est un miroir parabolique. L'ampoule est alors placée au fond de la parabole. De préférence selon cette variante, la tête de la source lumineuse est rotative, pouvant être tournée au moins à 180° : la tête est donc orientable, selon la définition précédente.

Si la source lumineuse 6 ne comporte pas de tête orientable -comme cela est le cas de la variante d'exécution représentée sur les figures- permettant que le faisceau lumineux puisse être dirigé d'un coté ou à son opposé par rotation de cette tête ou par bascule de moyens d'orientation du faisceau, il faut procéder au placement manuel de la source lumineuse sur la face appropriée de son corps 60 de sorte que le faisceau lumineux soit dans la direction de la visée de la caméra dont on veut se servir pour faire la prise de vue. On pourra donc avantageusement prévoir d'équiper deux faces opposées du corps 60 de la source lumineuse 6 de moyens de fixation antagonistes et ainsi différencier la fixation pour prise de vue avec la caméra frontale 3 ou avec la prise de vue avec la caméra dorsale 2, les zones de positionnement 5,5' comportant donc alors les parties complémentaires des moyens de fixation. Par exemple, dans le cas de la bande auto-agrippante, la première zone de positionnement 4 comportera des crochets et la seconde zone de positionnement 5' comportera des boucles. Dans le cas de la variante préférée avec des aimants, on choisira des polarités différentes pour les deux zones de positionnement 5,5' et on munira la source lumineuse 6 d'aimants 8,8' de polarité opposée sur les faces correspondantes.

L'alimentation énergétique de la source lumineuse 6 pourra être assurée indifféremment par des batteries, des cellules photovoltaïques ou par liaison filaire avec la tablette tactile (alimentation via un port de connexion).

La source lumineuse 6 pourra être équipée de tout type d'ampoule. Elle sera avantageusement équipée d'au moins une diode électroluminescentes, qui ont une consommation électrique très faible et procurent une intensité lumineuse très intéressante pour obtenir le reflet cornéen. On pourra également prévoir une diode électroluminescente émettant dans la gamme des infrarouges. En effet, la brillance des pupilles est amplifiée dans les infrarouges. Alternativement, la source lumineuse pourra être munie d'ampoules à incandescence ou halogène, sans sortir du cadre de la présente invention.

Selon une variante d'exécution, l'allumage et l'extinction de la source lumineuse peut être commandé par le déclenchement ou par la préparation de la prise de vue photographique, par exemple par ondes radio, notamment selon la technologie Bluetooth (marque déposée), ou encore par liaison filaire avec un port de communication équipant la tablette tactile (prise jack audio ou de type Universal Serial Bus ou analogue).

### Application industrielle

Le système d'éclairage photographique selon l'invention est particulièrement destiné à équiper des tablettes tactiles munie d'un programme informatique permettant de réaliser des prises de mesure de montures de lunettes portées par une personne afin de personnaliser les verres correcteurs et d'assurer leur centrage en fonction de la physionomie du porteur.

En outre, dans les cas où la source lumineuse émet dans les infrarouges, le système pourra être utilisé pour transformer la tablette tactile en télécommande domotique.

## Revendications

1. Système d'éclairage photographique pour tablette tactile (1) comportant une première caméra (2) dorsale, et équipé d'une prise jack audio **caractérisé en ce que** ledit système est constitué d'une coque (4) de protection dorsale amovible formée de manière à être placée sur le dos de la tablette tactile, munie d'une source lumineuse (6) et **en ce que** l'alimentation énergétique de la source lumineuse (6) est assurée par un câble formé de manière à être connecté à ladite prise jack audio.

2. Système selon la revendication 1 **caractérisé en ce que** l'allumage et l'extinction de la source lumineuse est commandé par le déclenchement ou par la préparation de la prise de vue photographique par liaison filaire avec la prise jack audio équipant la tablette tactile.

3. Système selon la revendication 1 **caractérisé en ce que** la source lumineuse (6) est solidarisée de manière permanente sur ladite coque (4).

4. Système selon la revendication 1 **caractérisé en ce que** la coque (4) et la source lumineuse (6) sont munies de moyens de liaison permettant une fixation amovible de la source lumineuse (6) sur ladite coque (4).

5. Système selon la revendication 4 **caractérisé en ce que** les moyens de liaison sur la coque (4) forment au moins une première zone de positionnement (5) de la source lumineuse (6) sur ladite coque (4).

6. Système selon la revendication précédente **caractérisé en ce que** les moyens de liaison sur la coque (4) forment en outre une seconde zone de positionnement (5') de la source lumineuse (6) sur ladite coque (4).

7. Système selon l'une des revendications 4 à 6 **caractérisé en ce que** les moyens de liaison sont du type bande adhésive.

8. Système selon l'une des revendications 4 à 6 **caractérisé en ce que** les moyens de liaison sont du type bande auto-agrippante par boucles et crochets.

9. Système selon l'une des revendications 4 à 6 **caractérisé en ce que** les moyens de liaison sont des aimants.

10. Système selon la revendication précédente **caractérisé en ce que** la source lumineuse (6) est munie d'aimants de polarité opposée à ceux de la coque (4).

11. Système selon l'une des revendications 4 à 10 **caractérisé** en ce la source lumineuse (6) comporte des moyens d'orientation du faisceau lumineux qu'elle génère de telle sorte qu'il soit perpendiculaire au plan principal de la coque (4) et ainsi parallèle à l'axe de visée de la caméra (2,3) de la tablette tactile (1) lorsque le système est assemblé sur ladite tablette (1).

12. Système selon la revendication précédente **caractérisé en ce que** les moyens d'orientation comportent une surface de réflexion.

13. Système selon l'une des revendications 11 ou 12 **caractérisé en ce que** la source lumineuse (6) comporte une tête orientable.

## Patentansprüche

1. System zur photographischen Beleuchtung für Tablet (Tabletcomputer mit berührungsempfindlichem Bildschirm) (1), aufweisend eine am Rücken befindliche erste Kamera (2) und ausgerüstet mit einer Audio-Klinkenbuchse,
**dadurch gekennzeichnet, dass** das System aus einer abnehmbaren Rückenschutzschale (4) besteht, die derart ausgebildet ist, dass sie auf der Rückseite des Tablet angeordnet werden kann, und mit einer Lichtquelle (6) ausgerüstet ist, sowie dadurch, dass die Energieversorgung der Lichtquelle (6) durch ein Kabel gewährleistet wird, das derart ausgebildet ist, dass es an die Audio-Klinkenbuchse anzuschließen ist.

2. System nach Anspruch 1, **dadurch gekennzeichnet, dass** das Einschalten und Ausschalten der Lichtquelle durch das Auslösen oder durch die Vorbereitung der photographischen Aufnahme über eine Drahtverbindung mit der Audio-Klinkenbuchse gesteuert wird, mit welcher das Tablet ausgerüstet ist.

3. System nach Anspruch 1, **dadurch gekennzeichnet, dass** die Lichtquelle (6) in dauerhafter Weise auf der Schale (4) befestigt ist.

4. System nach Anspruch 1, **dadurch gekennzeichnet, dass** die Schale (4) und die Lichtquelle (6) mit Verbindungseinrichtungen ausgerüstet sind, die ein abnehmbares Befestigen der Lichtquelle (6) auf der Schale (4) erlauben.

5. System nach Anspruch 4, **dadurch gekennzeichnet, dass** die Einrichtungen zur Verbindung auf der Schale (4) mindestens eine erste Zone zur Positionierung (5) der Lichtquelle (6) auf der Schale (4) bilden.

6. System nach dem vorhergehenden Anspruch, **dadurch gekennzeichnet, dass** die Einrichtungen zur Verbindung auf der Schale (4) weiter eine zweite Zone zur Positionierung (5') der Lichtquelle (6) auf der Schale (4) bilden.

7. System nach einem der Ansprüche 4 bis 6, **dadurch gekennzeichnet, dass** die Einrichtungen zur Verbindung vom Typ eines Klebebands sind.

8. System nach einem der Ansprüche 4 bis 6, **dadurch gekennzeichnet, dass** die Einrichtungen zur Verbindung vom Typ eines Klettverschlussbands sind.

9. System nach einem der Ansprüche 4 bis 6, **dadurch gekennzeichnet, dass** die Einrichtungen zur Verbindung Magnete sind.

10. System nach dem vorhergehenden Anspruch, **dadurch gekennzeichnet, dass** die Lichtquelle (6) mit Magneten von einer zu denen der Schale (4) entgegengesetzten Polarität ausgerüstet ist.

11. System nach einem der Ansprüche 4 bis 10, **dadurch gekennzeichnet, dass** die Lichtquelle (6) Einrichtungen zur Orientierung des durch sie erzeugten Lichtstrahls aufweist, so dass dieser senkrecht zur Hauptebene der Schale (4) und somit parallel zur Sichtachse der Kamera (2, 3) des Tablet (1) ist, wenn das System auf dem Tablet (1) montiert ist.

12. System nach dem vorhergehenden Anspruch, **dadurch gekennzeichnet, dass** die Orientierungseinrichtungen eine Reflexionsfläche aufweisen.

13. System nach einem der Ansprüche 11 oder 12, **dadurch gekennzeichnet, dass** die Lichtquelle (6) ein ausrichtbares Kopfstück aufweist.

## Claims

1. A system for photographic illumination, for a tablet computer (1) comprising a first rear camera (2), and provided with an audio jack
**characterised in that** said system consists of a removable rear protective shell (4) shaped in such a way as to be placed on the back of the tablet computer, provided with a light source (6) and **in that** the power supply of the light source (6) is provided by a cable shaped in such a way as to be connected to said audio jack.

2. System according to claim 1, **characterised in that** the turning on and off of the light source is controlled by the triggering or by the preparation of the photographic shot via a wire link to the audio jack provided in the tablet computer.

3. System according to claim 1, **characterised in that** the light source (6) is permanently rigidly attached onto said shell (4).

4. System according to claim 1, **characterised in that** the shell (4) and the light source (6) are provided with connection means allowing removable attachment of the light source (6) onto said shell (4).

5. System according to claim 4, **characterised in that** the connection means on the shell (4) form at least a first zone (5) for positioning the light source (6) on said shell (4).

6. System according to the previous claim, **characterised in that** the connection means on the shell (4) further form a second zone (5') for positioning the light source (6) on said shell (4).

7. System according to one of claims 4 to 6, **characterised in that** the connection means are of the adhesive strip type.

8. System according to one of claims 4 to 6, **characterised in that** the connection means are of the hook-and-loop self-gripping strip type.

9. System according to one of claims 4 to 6, **characterised in that** the connection means are magnets.

10. System according to the previous claim, **characterised in that** the light source (6) is provided with magnets having an opposite polarity to those of the shell (4).

11. System according to one of claims 4 to 10, **characterised in that** the light source (6) comprises means for directing the light beam that it generates in such a way that said beam is perpendicular to the main plane of the shell (4) and thus parallel to the axis along which the camera (2, 3) of the tablet computer (1) is aimed when the system is mounted on said tablet (1).

12. System according to the previous claim, **characterised in that** the direction means comprise a reflective surface.

13. System according to one of claims 11 and 12, **characterised in that** the light source (6) comprises a swivelling head.
